# EUROPEAN PATENT SPECIFICATION

(11) **EP 3 260 560 B1**
(45) Date of publication and mention of the grant of the patent: **16.10.2019**
(21) Application number: 16001421.3
(22) Date of filing: 24.06.2016
(51) Int. Cl.: C22B 7/00, C22B 1/00

(54) **METHOD FOR PROCESSING OF TECHNOLOGICAL WASTE FROM THE PROCESSING OF COPPER ORE AND CONCENTRATES CONTAINING IRON**
VERFAHREN ZUR VERARBEITUNG TECHNOLOGISCHER ABFÄLLE AUS DER VERARBEITUNG VON KUPFERERZEN UND EISENKONZENTRATEN.
PROCÉDÉ DE TRAITEMENT DES DÉCHETS TECHNOLOGIQUE DE LA TRANSFORMATION DE CUIVRE ORE ET CONCENTRES CONTENANT DE FER.

(43) Date of publication of application: 27.12.2017
(73) Proprietor: I.R.T. AD, Sofia 1164 (BG)
(72) Inventor: Dragomirov, Alexandar Assenov, Sofia (BG); Teoharov, Lubomir Dimitrov, Sofia (BG)
(74) Representative: Nesheva, Valentina Velikova

(56) References cited:
- EP-A1- 2 998 411
- KR-A- 20150 106 661
- US-A1- 2011 081 284
- US-A1- 2016 032 422
- LEE ET AL: "Dissolution of iron oxide using oxalic acid", HYDROMETALLURGY, ELSEVIER SCIENTIFIC PUBLISHING CY. AMSTERDAM, NL, vol. 87, no. 3-4, 19 June 2007 (2007-06-19), pages 91-99, XP022120187, ISSN: 0304-386X, DOI: 10.1016/J.HYDROMET.2007.02.005

## Description

### TECHICAL FIELD

The present invention relates to a method for processing of technological waste from the processing of copper ores and concentrates containing iron. One object of the invention, e.g., is middling slime (waste) which is a refuse of the flotation processing of ore concentrates and slags from the high temperature pyrolytic processing of the same with a subsequent obtaining of iron oxide compounds - hematite, magnetite (iron(II), (III) oxides), hydrated ferric oxide (ferrihydrite) or ferric hydroxide. The method can be applied to pyrolytic slags from metallurgy as well. In the course of carrying out of the invention are obtained also concomitant products, namely a silicate phase with an adjustable content of iron for the purposes of the cement industry, and ferrosilicon.

### BACKGROUND OF THE INVENTION

The refuse of the flotation processing of ore concentrates containing iron is an iron containing silicate in which the major phases are fayalite and magnetite but residual quantities of compounds of other metals are contained as well in the form of their oxides or silicates as well as a free silicon dioxide.

Methods for extraction of metals from ores using oxalic acid are known. In the Chinese patent application CN 102674643 A is implemented a method for leaching of alluvial materials and clays containing iron. In the Greek patent GR waste and ores. The leaching with oxalic acid is implemented with materials unsuitable for treatment such as ceramic powders with the purpose to decrease the iron content in view of its tendency to react with the ceramic glazes (see EP 0 514 577 A1).

In the Chinese Patent Application CN 1962437 A is disclosed a method for leaching with oxalic acid of a silicon sand covered by an iron film, the method including the following steps: putting the sand in 1-10 % oxalic acid solution in the ratio of 100:100, heating to 80-90°C, stirring vigorously for 1-5 hours which leads to dissolving the iron film from the sand surface and forming of iron oxalate; separation of the solid from the liquid, washing with pure water and filtering to obtain the product which however is not a high purity iron compound.

In the Bulgarian Patent BG 66201 B1 is disclosed a process for recycling of refuses from the production of copper containing iron silicate - fayalite, the process comprising the following steps: oxidation of fayalite in air at the temperature of 700-1100°C for 3-5 hours; addition of hydroxide or carbonate of an alkali metal and treating the mixture till a mixture of silicate of iron oxides is obtained; addition of water and heating to 100°C or at higher pressure and temperature of 150-250°C; separation of the undissolved iron oxides by precipitation or filtration and washing with water or an aqueous solution of a mineral acid (hydrochloric acid, sulphuric acid). In this patent is implemented a preliminary separation of the silicate phase by a high temperature dissolution of the silicon matrix with alkali reagents whereupon it passes into the soluble forms of alkali silicates with a different modulus. However at these conditions copper compounds are transformed into copper oxide which remains as impurity in the iron containing product and this renders the process not useful for the iron oxide pigments industry. Furthermore this process does not use leaching with oxalic acid and does not result in the dissociation of iron compounds with high purity. US 2011/081284 A1 discloses a process for processing metallurgy waste from the production of aluminum and bauxite. The process aims at the recovery of the metallurgy waste obtaining ferrosilicon therefrom (generating secondary waste in the form of slug) and makes use of aluminum compounds as precursors of the reduction agent (metallic aluminum) which is obtained in situ at temperature of 1750-1800°C.. LEE ET AL: "Dissolution of iron oxide using oxalic acid"; HYDROMETALLURGY, Elsevier Scientific Publishing CY, vol. 87, No. 3-4, 19 June 2007, pages 91-99, XP022120187; ISSN: 0304-386X; DOI: 10.1016/J.HYDROMET.2007.02.005 represents scientific knowledge regarding the interactions of the system "oxalate precursor - iron oxide/hydroxide". The equilibrium of the aqueous solutions of alkali and ammonium oxalates in different conditions (pH, concentration, temperature) as well as the behavior of different ionic and complex iron forms in such systems is discussed. In this sense this document is a fundamental base for the process proposed by the present application. The cited publication explicitly states that iron solubility decreases with the increase of the concentration of pure oxalic acid without giving any advice how to solve this problem.

The implementation of all these patented technological approaches does not overcome significant problems in this technical field.

In the first place these methods allow the processing only of such materials in which the iron content is low. At high iron content the selected conditions lead to the dissolution of a significant amount of the silicate backbone and the resulting iron containing products are polluted with colloid silicon dioxide and therefore do not possess high purity.

Another common feature of these processes is the implementation of chemical and photochemical reduction of the trivalent forms to divalent forms of iron during the leaching of the iron with oxalic acid, using the huge difference in the solubility of both oxalates. Divalent oxalate is practically insoluble and thus the effectiveness of the leaching is increased but in the presence of alkali earth metals which are always present in the industrial waste of the ore output the oxalate precipitate is accompanied by calcium and magnesium oxalates which have commensurable insolubility and are not separated from the iron phase.

Another problem is the formation of mixed phases during the step of separation of the precipitates from the oxalate solution with no possibility of their separation if no reverse dissolution of the iron oxalate and its subsequent secondary precipitation is not applied which leads to the inclusion of an additional step and lower effectiveness of the process.

In Hernandez et al., "Recovery of metals from Cuban nickel tailings by leaching with organic acids followed by precipitation and magnetic separation", Journal of Hazardous Materials, ELSEVIER, Amsterdam, NL, 24 November 2006, pages 25-30, XP005779813, ISSN: 0304-3894, D0I: 10.1016/J.JHAZMAT, 2006.03.074 is disclosed a method of extraction of metals, including iron, from flotation tailings of Cuban nickel ore with a comparatively high iron content (44.2%). The method comprises a step of percolation leaching at ambient temperature during 5 days with a mixture of analytic tartaric acid (>99.7%) and analytic oxalic acid (>99.0%) wherein the quantity of tartaric acid is 3 times greater than the quantity of oxalic acid; a step of long precipitation at an ambient temperature (16 days) and a thermic processing of the precipitate. In the article is described also a subsequent step of magnetic separation of the secondary tailings from the leaching step to enrich its iron content and its direct use as a raw material in the steel industries.

EP 2998411 discloses a method for processing of industrial waste of the flotation processing of ore concentrates containing iron wherein a preliminary alkali leaching of the silicon dioxide from the flotation slags (fayalite) is used, with a subsequent treatment of the residual fayalite with an oxalic acid solution in a oxidation medium. In this method the iron compounds and the remaining elements are transformed into oxalate compounds and are treated individually by separation. However a drawback of this method is the concentration of copper, zinc, nickel, aluminum and calcium compounds in the residual solid phases which impedes their selective extraction. Another drawback is that in the course of carrying out the process is obtained a solution of a soluble alkali metal silicate containing zinc, nickel and aluminum which is also an obstacle to its use without a secondary processing.

In PCT/BG2015/000015 is used a treatment of fayalite with an oxalic acid solution wherein an equivalent ratio of Na: Fe: C₂O₄ is created after the oxalate leaching in an oxidation medium, aiming to obtain a sodium ferric oxalate solution. In this manner a more complete extraction of iron is achieved by the transformation of its divalent form into a trivalent form, the latter having a greater solubility in the form of sodium ferric oxalate. A drawback of this method is the raised content of sodium hydroxide in the system which increases the solubility of aluminum, zinc and nickel and they are adsorbed onto the active surface of the obtained iron hydroxide. Another drawback is the difficult washing out of iron hydroxide from the adsorbed amounts of sodium hydroxide on its surface at high level of alkali presence.

The drawbacks of the enumerated known processes are overcome by the proposed in the present patent application method for processing of technological waste from the processing of copper and ore concentrates containing iron, e.g. in the form of iron silicate (fayalite) obtained from flotation or pyrolytic processes containing magnetite and free silicon dioxide.

### DISCLOSURE OF THE INVENTION

The present method applies such an approach which uses the great inclination of the oxalate ion for forming stable complexes and the driving force of the process is not the high acidity but the complex formation. Thus the transition of the iron into a soluble form is activated in a medium with low acidity and is controlled by the equilibriums in the system.

As is known from Sung at all. "Dissolution of iron oxide using oxalic acid" in the region of pH 2-4 the free oxalic acid exists in equilibrium with the hydrogen oxalate anion and the oxalate anion. At higher pH values the equilibrium is transformed and only the anionic forms exist in the solution and above pH 8.5 only the oxalate anion exists, and the character of the equilibrium practically does not depend on the type of the cation (Na⁺, K⁺ or NH⁺).

The iron in the flotation waste or pyro metallurgic slags exists in its two oxidation states, Fe(II) and Fe(III), forming hematite and magnetite structures.

During the research preceding the present invention was found out that in the presence of ion forms of the iron in a solution of ammonium oxalate/oxalate complexes in the pH interval of 2-4 the trivalent form of iron forms ferric oxalate complexes according to the reaction:

3NH₄HC₂O₄ + Fe(III) → (NH₄)₃Fe(C₂O₄)₃

And the divalent form of iron forms ferric oxalate which has low solubility, releasing an ammonium cation into the solution which alkalizes the same and leads to higher pH values:

NH₄HC₂O₄ + Fe(II) → FeC₂O₄↓ + NH₄⁺

In the course of the equilibrium running with an increase of pH, the neutral pH region is reached wherein a hydrolysis of the trivalent form of iron is going on and iron hydroxide complex is formed which is energetically more stable.

The present method according to the invention uses the capability of the ammonium oxalates to form an ammonium ferric oxalate complex, inhibiting the reaction of forming a ferric oxalate by carrying out the process in a medium with high acidity with bubbling an oxygen containing gas, such as oxygen or air, through the system. In this manner by a continuous oxidation of the divalent iron the equilibrium runs solely toward forming the soluble ammonium ferric oxalate, preventing the increase of pH above 4. In order to carry out a more complete leaching of the iron out of the raw materials it is necessary to maintain a continuous excess of ammonium hydrogen oxalate which in the present invention is achieved by introducing a solid phase of ammonium hydrogen oxalate into the solution with pH 2-4 (an oversaturated solution is created purposefully using the low solubility of the ammonium hydrogen oxalate) and the reaction is carried out in a heterogeneous medium, the solid ammonium hydrogen oxalate having the function of a depot for the hydrogen oxalate ion for the whole duration of the process.

In the present invention the solution of the obtained ammonium ferric oxalate is separated from the solid silicate phase and is alkalized (precipitated) with ammonium hydroxide at the temperature of 50-60°C to obtain iron hydroxide.

In contrast to the existing methods for leaching of iron containing slags and pyro metallurgic slags the present invention does not allow the passing of aluminum into the obtained iron hydroxide due to its complete insolubility in and ammonium medium, as well as of the dissolved silicon dioxide obtained in the course of the destruction of the silicate matrix of fayalite, which coagulates into a silicon hydrogel in the presence of ammonium medium.

Another advantage of the method according to the invention is the recycling of the ammonia oxalate complexes by applying of an ion exchange process leading to obtaining a solution of ammonium hydrogen oxalate with pH 2.1-2.5 which serves as leaching agent, the recycling of the ion exchange resin being completely done with reagents contained in the system.

The present invention defers significantly from the known methods in that the copper, zinc and nickel compounds present in the slags and the waste are leached with ammonium hydroxide before the carrying out of the oxalate treatment and are separated in the form of an ammonium solution of their amphoteric hydroxides. In this manner is prevented their passing into the obtained final products.

A novel approach of the present invention is obtaining of ferrosilicon by means of forming and separating a mixed hydrogel of silicon dioxide and iron hydroxide which is reduced with coke in an inert gas medium. The chemical interaction is carried out in the low temperature region up-to 1400°C because of the high reactivity of the mixed hydrogel which is due to the high specific surface and small size of the particles of both phases.

The presented method is directed primarily to the processing of flotation slags with high content of fayalite but it is suitable also for other residual products of industrial activity containing iron such as pyrolytic slags of the metallurgy.

The starting material is middling slime or pyrolytic slag containing as major components fayalite, magnetite and free silicon dioxide in amorphous or crystalline form. Accompanying elements at impurities level are copper, calcium, magnesium, zinc, nickel and aluminum, and lead and arsenic are present at trace level.

The substance of the method consists in the following:
**Step** 1: The starting raw material is subjected to a preliminary leaching with a solution of ammonium hydroxide at the boiling temperature wherein the copper, nickel and zinc compounds are transformed into hydroxides and are dissolved in the ammonium hydroxide due to their amphoteric properties. After the leaching they are separated from the raw material by filtration. The obtained filtrate is concentrated by evaporation and the water-ammonia vapor is condensed in the form of ammonium hydroxide, and is returned into the process for a next round of preliminary leaching. The concentrate containing copper, nickel and zinc compounds is subjected to a subsequent treatment to extract these metals with known methods.
**Step** 2: The iron containing residual pulp is mixed with an oversaturated solution of ammonium hydrogen oxalate with pH 2.1-2.5 into which an alkali metal hydrogen oxalate salt is added, in a preferred embodiment of the invention this salt being a sodium hydrogen oxalate, in the amount of 5 % by weight of the total amount of the introduced ammonium hydrogen oxalate. The presence of an alkali metal hydrogen oxalate, e.g. sodium hydrogen oxalate, increases the stability of the nascent ferric oxalate complex, increases its solubility and promotes the effectivity of the ammonium hydrogen oxalate as a leaching agent. The leaching of the raw material with an ammonium hydrogen oxalate is carried out at a continuous bubbling of an oxygen containing gas, such as oxygen or air, at temperature of 50 to 80°C for 1.5 to 3 hours.
**Step** 3: The obtained suspension is filtered, the residual solid phase being washed and separated. This residual solid phase is a silicate phase with low iron content - up-to 15% and it is of interest as a raw material for the cement industry. The filtrate containing ammonium ferric oxalate is neutralized with an ammonium hydroxide solution at pH 5.2-6.0 wherein a hydrogel of the silicon dioxide is precipitated, this hydrogel being filtered and the filtrate is a pure solution of ammonium ferric oxalate. The hydrogel precipitated and separated by filtration is treated, without any washing and drying, with an ammonium hydroxide solution at pH 9.0-9.5. During this treatment the solution of ammonium ferric oxalate incorporated in the pores of the hydrogel is precipitated as an iron hydroxide onto the surface of the silicon dioxide forming a mixed hydrogel of silicon dioxide and iron hydroxide. After filtration and washing it is dried at 120°C till a stable weight. The mixed hydrogel obtained after the drying has a homogenous distribution of both phases (silicon hydroxide/iron hydroxide) and these phases are incorporated at a molecular level. Adding of coke at an over stoichiometric excess of 10% by weight of the total oxygen content in the mixed hydrogel allows that the reduction process is carried out with a gradual heating up-to 1400°C in an inert medium and the interaction and reduction are carried out in a low temperature region, obtaining ferrosilicon.
**Step** 4: The filtrate representing a pure solution of ammonium ferric oxalate obtained after the removal of the hydrogel and having pH 5.2-6.0 is precipitated with an ammonium hydroxide solution up-to pH 9.5-10.0 forming iron hydroxide. The precipitation is carried out at temperature of 55-65°C. An advantage of the invention is that ammonium ferric oxalate is used as a precursor for obtaining iron hydroxide. The presence of ammonium ions in the form of complex salt with the iron in the solution prevents the local oversaturation during the addition of the precipitator, this local oversaturation being characteristic for other methods of obtaining iron hydroxide, and iron hydroxide with the structure of ferrihydrite is stabilized in the medium and no conditions are created for a spontaneous hydrolysis and transition to other structural forms. The obtained iron hydroxide is filtered and washed with a thinned solution of ammonium hydroxide in order to remove completely the oxalate ions due to their higher solubility in an ammonium medium compared to water. Here can be used the water-ammonia condensate obtained at the next Step 5 after the evaporation of the filtrate of Step 3. Second washing with water follows in order to separate the ammonium hydroxide and the solid phase is dried at temperature of 120 to 160°C yielding ferrihydrite.
**Step** 5: To the mixed hydroxide dried at 120°C of Step 2 is added coke in an over stoichiometric excess of 10% by weight of the total oxygen content in the mixed hydroxide and the mixture is treated in an oven with a gradual heating at the rate of 5 to 10°C per minute up-to 1400°C, and in an inert medium to synthesize ferrosilicon, with the duration of 2 to 5 hours depending on the rate of heating. The homogenous distribution of the silicon hydroxide and iron hydroxide and their incorporation at a molecular level, achieved during the treatment of the hydrogel at Step 2 allow the reduction to be carried out in the low temperature region up-to 1400°C.
**Step** 6: The filtrate obtained from the filtration of the iron hydroxide at Step 3, combined with the ammonium hydroxide solution of the first washing at Step 3, is subjected to evaporation until the temperature of the vapors is 98-99°C, removing the redundant ammonium hydroxide. Then the mixture is treated with cation exchange resin in a H⁺ form in a reactor with stirring appliance at temperature of 65-70°C, up-to pH 0.9-1.0. The obtained solution of practically pure oxalic acid is removed and the saturation of the resin continues up-to pH 2.1-2.5. The obtained ammonium hydrogen oxalate is removed from the reactor and cooled in a crystallizer to 40°C to obtain a solid phase, or oversaturated solution respectively, which is used to treat the pulp at Step 2. The type of the resin, its chemical composition and other characteristics are not an object of the invention. Any commercial cation exchange resin can be used.
**Step** 7: The ion exchange resin is saturated additionally with the solution of the second washing of Step 3 up-to pH 8.5-9.0 and the obtained thinned solution of ammonium oxalate is removed. A treatment of the resin with the ammonia distillate of Step 5 follows and thereafter the resin practically contains no oxalate ions but only ammonium ions. The removed ammonium oxalate solution serves as the solution for the first washing of the iron hydroxide at Step 3.
**Step** 8: Recovery of the ion exchange resin. The ion exchange resin in its NH₄⁺ form is washed with deionized water at 90°C at a continuous bubbling of air. Under these conditions the adsorption of the ammonium ion is minimal and it is separated from the system as a water-ammonia distillate, the resin transiting into its neutral form. Washing with the solution of the practically pure oxalic acid with pH 0.9-1.0 obtained at Step 5 follows. Thus the resin is transferred into its H⁺ form and is ready to be used in a next round.

The present method does not create novel chemical reactions but it uses known chemical interactions applying the same purposefully in a nonconventional manner overcoming the problems of the prior art by means of differences from the known practice which are as follows:
- to the treatment is subjected a raw material with a content of magnetite, fayalite and free silicon dioxide at the ratios of magnetite to fayalite from 18:82 to 78:22. Before the actual chemical treatment the raw material is subjected to an extraction with ammonium hydroxide to separate the copper, zinc and nickel compounds.
- the purified iron containing pulp is treated with an oversaturated solution of ammonium hydrogen oxalate into which is added 5% of an alkali metal hydrogen oxalate, e.g. sodium hydrogen oxalate. The amount of ammonium hydrogen oxalate as a complex forming agent is dosed equivalently to the iron content of the pulp to obtain a molar ratio of Fe:C₂O₄=1:4 so that a ferric oxalate complex is formed at the molar excess of oxalate. The pulp is treated at temperature of 50 to 85°C for 1.5 to 3 hours and all the time during this air or oxygen is bubbled in order to maintain a medium with high acidity.
- upon the completion of the process the pulp is filtered and the filtrate is neutralized to pH 5.2-5.5 to remove the dissolved silicon dioxide in the form of a hydrogel. Second filtration follows and the obtained filtrate which is a pure ferric oxalate complex solution is precipitated with ammonium hydroxide to pH 9.0-9.5 and temperature 45-50°C obtaining an iron hydroxide pulp which is left in the stock medium from 30 to 60 minutes at the precipitation temperature.
- the silicon dioxide hydrogel without any washing is precipitated with ammonium hydroxide, then it is washed and dried to yield a mixed hydrogel of the iron and the silicon. The obtained mixed hydrogel is mixed homogenously with coke in equivalent amounts with regard to the dry oxide phases content and is heated to 1400°C in an inert medium at the rate of 5 to 10°C per minute to obtain ferrosilicon.
- the purified iron hydroxide pulp is filtered, washed and dried at temperature of 120 to 160°C to yield pure ferrihydrite.
- the combined filtrates resulting of the precipitation processes representing ammonia-alkali metal oxalate solutions are treated with an ion exchange resin in its H⁺ form up-to pH 2.2-2.8 and are concentrated to obtain an oversaturated solution which is returned into the process for a next round.

Hereafter the invention will be explained by reference to the Examples of its embodiment which however are only illustrative and do not limit in any way its scope.

### EXAMPLES

The functionality of the method is disclosed by means of treatment of samples of the raw material differing by its composition and taken at different times and from different places of the waste-depots for depositing of middling slime and pyrolytic slags. The ratio of the magnetite to fayalite is determined by the results of X-ray phase and Mossbauer analyses. The X-ray phase analysis is carried out by using Co-K alpha radiation, scanning step of the spectrum 0.05o and increased time for collecting the impulses - 5 s. The phase identification is made by means of the data base JCPDS. The Mossbauer spectra are measured with a source 57Co/Rh (Activity@15 mCi), standard - alpha Fe.

The composition of the samples is the following:
Sample 1: Content of total iron expressed as Fe - 29%. Content of free silicon dioxide 14%. Ratio of magnetite to fayalite 47:53.
Sample 2: Content of total iron expressed as Fe - 51%. Content of free silicon dioxide 9 %. Ratio of magnetite to fayalite 78:22.
Sample 3: Content of total iron expressed as Fe - 36 %. Content of free silicon dioxide 16 %. Ratio of magnetite to fayalite 67:33.
Sample 4: Content of total iron expressed as Fe - 9 %. Content of free silicon dioxide 26 %. Ratio of magnetite to fayalite 18:82.

### Example 1

50.0 g of fayalite waste having a ratio of magnetite to fayalite 18:82 is weighted and it is subjected to extraction with a 20% aqueous solution of ammonium hydroxide for 1 hour at temperature of 40°C. After filtration and washing the pulp is subjected to leaching with an oversaturated aqueous solution of ammonium hydrogen oxalate introduced in equivalent amounts with regard to the iron content in order to obtain an ammonium ferric oxalate complex. 5% of sodium hydrogen oxalate is added to the ammonium hydrogen oxalate solution to stabilize the complex. The amount of the hydrogen oxalate solution with regard to the fayalite has a weight ratio of solid phase: liquid phase = 1:7 for 3.0 hours at temperature of 85°C maintaining the ratio of Fe: NH₄: C₂O₄=1:4:4 (10% excess of ammonium hydrogen oxalate). During the leaching oxygen is bubbled to provide an oxidation medium and upon the completion of the process the reaction mixture is filtered. The obtained filtrate is neutralized partially to pH 5.2-6.0 and is filtered again. A silicon hydrogel is obtained which contains a stock solution within its pores. Without any washing the hydrogel is treated with an ammonium hydroxide solution to pH 9.5 and the obtained mixed hydroxide of the silicon and the iron is washed and dried. Then it is mixed with coke at 10% excess with regard to the equivalent oxygen content of the oxide phases and it is gradually heated to 1400°C in an inert medium. The X-ray analysis of the obtained crystalline phases reveals the presence of two phases only, and namely Fe₃Si and Fe₅Si₃. The ammonium ferric oxalate solution obtained as a filtrate after the removal of the hydrogel of the silicon dioxide is treated with ammonium hydroxide till pH 9.5 at temperature of 50°C and the obtained iron hydroxide is left in the stock solution for 1 hour at the same temperature. After filtration the cake is washed and dried at 160°C. The product is examined by Mossbauer spectroscopy and the sole presence of ferrihydrite is confirmed, without any traces of other iron hydroxides or traces of fayalite.

### Example 2

100.0 g is weighted as an aliquot part of Sample 2, obtained as a slag resulting from a pyro metallurgic process, having a ratio of magnetite to fayalite of 78:22. In the reactor the sample is subjected to a direct treatment with an ammonium hydrogen oxalate under the conditions of Example 1, the ratio of fayalite to the liquid phase being 1:20 and the amount of the ammonium hydrogen oxalate corresponding to the equivalents Fe: NH₄: C₂O₂ = 1:4:4. The treatment continues for 2 hours at temperature of 75°C and with bubbling of air, then after the completion of the reaction the reaction mixture is neutralized partially up-to pH 5.5 without isolating the obtained silicon dioxide hydrogel which serves as a coagulant of the obtained precipitate, this precipitate being filtered, washed and dried at 120°C. The filtrate is treated under the conditions of Example 1 until a cake of iron hydroxide is obtained, the latter being dried at 120°C to yield ferrihydrite.

### Example 3

The obtained combined filtrates representing solutions of ammonium oxalate with an excess of ammonium hydroxide and containing sodium oxalate are distilled to separate the ammonium hydroxide until a neutral solution of ammonium oxalates is obtained, the latter solution being passed through an ion exchange resin in a H⁺ form. The original quantities of the solution with pH up-to 1.0-1.2 are removed and the solution with pH in the interval of 1.2-3.0 is collected, the latter solution representing a solution of ammonium and sodium oxalates. This solution is concentrated according to known methods until an oversaturated solution of ammonium hydrogen oxalate is obtained, the latter solution being used to treat 50 g of fayalite with a ratio of magnetite to fayalite of 67: 33. The treatment is carried out under the conditions of Example 1 with the sole difference that the ratio of fayalite to the liquid phase amount is 1:10.

The ion exchange resin which produced the solution of hydrogen oxalate with pH up-to 3.0 is treated with an ammonium hydroxide solution up-to pH 9.5 and then is washed with deionized water up-to pH 8.0. Air is bubbled through the resin at the temperature not more than 90°C until pH 7.0-7.3. Then the resin is treated with the obtained and separated solution of hydrogen oxalate with pH up-to 1.0-1.2 and thus it is transformed again into its H⁺ form ready for a next round.

## Claims

1. A method for processing of technological waste from the processing of copper ores and concentrates containing iron comprising the following steps:
Step 1: preliminary leaching of the starting raw material with a solution of ammonium hydroxide at the boiling temperature of the ammonium hydroxide; and separation of the solid raw material from the liquid by filtration and concentration to obtain residual pulp;
Step 2: leaching of the residual pulp with an oversaturated solution of ammonium hydrogen oxalate with pH 2.1 to 2.5 with added hydrogen oxalate salt of an alkali metal in the ratio of 95:5 of ammonium hydrogen oxalate: alkali metal hydrogen oxalate, at a continuous bubbling of an oxygen containing gas at a temperature of 50 to 80°C for the duration of 1.5 to 3 hours;
Step 3: filtering of the suspension of Step 2 and precipitating the filtrate with an ammonium hydroxide solution up-to pH 5.2-6.0 and then removing the obtained precipitated hydrogel by filtration;
Step 4: precipitating the filtrate of Step 3 with an ammonium hydroxide solution with pH 9.5-10.0 at a temperature of 55-65°C and filtration;
Step 5: washing the precipitate of Step 4 with a thinned solution of ammonium hydroxide and washing again with water;
Step 6: drying at temperature of 120 to 160°C.

2. A method for processing of technological waste from the processing of copper ores and concentrates containing iron according to Claim 1, **characterized in that** the oxygen containing gas is an atmosphere air or molecular oxygen.

3. A method for processing of technological waste from the processing of copper ores and concentrates containing iron according to Claim 1, **characterized in that** the hydrogen oxalate salt of Step 2 is ammonium hydrogen oxalate in the ratio with a sodium oxalate of 95:5.

4. A method for processing of technological waste from the processing of copper ores and concentrates containing iron according to Claim 1, wherein to the mixed dried hydroxide obtained at Step 2 is added coke in an over stoichiometric excess of 10% with regard to the total oxygen content of the mixed hydroxide and it is treated with heating at a rate of 5 to 10°C per minute in an inert medium and at a temperature up-to 1400°C for 2 to 5 hours.

5. A method for processing of technological waste from the processing of copper ores and concentrates containing iron according to Claim 1, wherein the filtrate from the filtration of the iron hydroxide of Step 3 together with the solution of ammonium hydroxide from the first washing of Step 3 is subjected to evaporation until the vapors reach a temperature of 98-99°C and is treated with a cation exchange resin at a temperature of 65-70°C, up-to pH 0.9-1.0, then the obtained solution of oxalic acid is separated and the saturation of the resin continues up-to pH 2.1-2.5 then the reaction mixture is cooled to 40°C and then the ion exchange resin is saturated additionally with the solution of the second washing of Step 3 up-to pH 8.5-9.0, then the obtained thinned solution of ammonium oxalate is returned to Step 3 where it serves as solution for the first washing operation of the iron hydroxide and the ion exchange resin is washed with a deionized water at 90°C with a continuous bubbling of air and then it is washed with the oxalic acid solution with pH 0.9-1.0 obtained at Step 5.

## Patentansprüche

1. Verfahren für Verarbeitung vom technologischen Abfall, entstanden durch Verarbeitung von eisenhaltigen Kupfererzen und Konzentraten, die folgende Etappen einschließt:
*Etappe 1*: Vorläufige Auslaugung des Startrohstoffs mit Lösung von Ammonium Hydroxid bei der Siedetemperatur des Ammonium Hydroxids und Abscheidung des Hartmaterials des Rohstoffs durch Filtration und Konzentration, damit eine Restpulpe erhalten wird;
*Etappe 2*: Auslaugung der Restpulpe mit gesättigter Lösung von Ammonium Hydrogen Oxalat mit pH von 2.1 bis 2.5 mit zugefügtem Hydrogenoxalatsalz eines alkalischen Metalls im Verhältnis von 95 : 5 des Ammonium Hydrogen Oxalats : Hydrogen Oxalate eines alkalischen Metalls bei ständiger Barbotage vom sauerstoffhaltigen Gas, bei Temperatur von 50 bis 80°C im Laufe von 1,5 bis 3 Stunden;
*Etappe 3:* Filtration der Suspension von Etappe 2 und Ablagerung des Filtrats mit einer Ammonium Hydroxid - Lösung mit pH 5.2 - 6.0 und danach - Beseitigung des erhaltenen abgelagerten Hydrogels durch Filtration;
*Etappe 4:* Ablagerung des Filtrats von Etappe 3 mit einer Ammonium Hydroxid - Lösung mit pH 9.5 - 10.0 bei Temperatur von 55-65°C und Filtration;
*Etappe 5:* Spülen des Sediments von Etappe 4 mit einer verdünnter Lösung von Ammonium Hydroxid und nochmaliges Spülen mit Wasser;
*Etappe 6:* Trocknen bei Temperatur von 120 bis 160°C.

2. Verfahren für Verarbeitung vom technologischen Abfall, entstanden durch Verarbeitung von eisenhaltigen Kupfererzen und Konzentraten gemäß Anspruch 1, die sich dadurch charakterisiert, dass das sauerstoffhaltige Gas atmosphärische Luft oder molekularer Sauerstoff ist.

3. Verfahren für Verarbeitung vom technologischen Abfall, entstanden durch Verarbeitung von eisenhaltigen Kupfererzen und Konzentraten gemäß Anspruch 1, die sich dadurch charakterisiert, dass der Hydrogenoxalatsalz von Etappe 2 ein Ammonium Hydrogen Oxalat ist, der im Verhältnis zu Natriumoxalat von 95:5 ist.

4. Verfahren für Verarbeitung vom technologischen Abfall, entstanden durch Verarbeitung von eisenhaltigen Kupfererzen und Konzentraten gemäß Anspruch 1, bei welcher zum gemischten getrockneten Hydroxid, erhalten in der Etappe 2, Koks im überstöchiometrischen Überfluss vom 10% in Bezug auf den gesamten Sauerstoffgehalt des gemischten Hydroxids zugefügt wird und mit Erhitzen bei Geschwindigkeit von 5 bis 10°C in Minute in einer inerten Umgebung und bei Temperatur bis 1400°C im Laufe von 2 bis 5 Stunden behandelt wird.

5. Verfahren für Verarbeitung vom technologischen Abfall, entstanden durch Verarbeitung von eisenhaltigen Kupfererzen und Konzentraten gemäß Anspruch 1, bei welcher das Filtrat von der Filtration des Eisenhydroxids von Etappe 3 zusammen mit der Ammonium Hydroxid - Lösung vom ersten Spülen in Etappe 3 einer Verdampfung unterworfen wird, bis der Dampf die Temperatur von 98-99°C erreicht und mit Kationaustauschharz bei Temperatur von 65-70°C bei pH 0.9 - 1.0 behandelt wird, danach wird die erhaltene Oxalsäurelösung abgesondert und die Harzsättigung bis pH 2.1 - 2.15 fortgesetzt; danach der Reaktionsgemisch bis 40°C abgekühlt wird und der Ionaustauschharz zusätzlich mit der Lösung vom zweiten Spülen von Etappe 3 bis pH 8.5 - 9.0 gesättigt wird und die erhaltene verdünnte Ammonium Oxalat - Lösung in Etappe 3 zurückgegeben wird, wo sie als Lösung für das erste Spülen des Eisenhydroxids dient, der Ionaustauschharz mit deionisiertem Wasser bei 90°C mit ständiger Luftbarbotage gespült wird und danach mit Oxalsäurelösung mit pH 0.9 - 1.0, erhalten in der Etappe 5 gespült wird.

## Revendications

1. Méthode de traitement des déchets technologiques provenant du traitement de minerais de cuivre et de concentrats contenant du fer, par étapes comme il suit:
Étape 1: frottage préalable de la matière première avec une solution d'hydroxyde d'ammonium à la température d'ébullition de l'hydroxyde d'ammonium ; et séparation du matériau solide de la matière première du liquide par filtrage et concentration, pour former de la pulpe résiduelle ;
Étape 2: frottage de la pulpe résiduelle avec une solution saturée d'hydrogénooxalate d'ammonium, pH de 2.1 à 2.5 avec le sel d'oxalate d'hydrogène supplémentaire d'un métal alcalin dans un rapport de 95 : 5 de l'oxalate hydrogène d'ammonium : l'hydrogène oxalate du métal alcalin, lors d'un barbotage continu de gaz contenant de l'oxygène à une température de 50 à 80 ° C pendant 1,5 à 3 heures;
Étape 3: filtrage de la suspension de l'étape 2 et précipitation du filtrat avec une solution d'hydroxyde d'ammonium jusqu'à pH 5.2 - 6.0 et après cela, élimination par filtration de l'hydrogel précipité résultant;
Étape 4: précipitation du filtrat de l'étape 3 à l'aide d'une solution d'hydroxyde d'ammonium à pH 9.5 - 10.0 à une température de 55-65°C et filtrage;
Étape 5: rinçage du résidu de l'étape 4 avec une solution diluée d'hydroxyde d'ammonium et
de nouveau lavage à eau ;
Étape 6: séchage à une température de 120 à 160°C.

2. Méthode de traitement de déchet technologique provenant du traitement de minerais de cuivre et de concentrats contenant du fer, vu la Revendication 1, **caractérisée par le fait que** le gaz contenant de l'oxygène, représente de l'air atmosphérique ou bien de l'oxygène moléculaire.

3. Méthode de traitement de déchet technologique provenant du traitement de minerais de cuivre et de concentrats contenant du fer, vu la Revendication 1, **caractérisée par le fait que** le sel d'oxalate d'hydrogène de l'étape 2, est un oxalate hydrogène d'ammonium, dont la proportion avec l'oxalate de sodium est de 95 : 5.

4. Méthode de traitement de déchet technologique provenant du traitement de minerais de cuivre et de concentrats contenant du fer, vu la Revendication 1, lors de laquelle à l'hydroxyde mélangé séché, reçu par l'étape 2, on ajoute du coke en excès stoechiométrique de 10 % par rapport au contenu total de l'oxygène de l'hydroxyde mélangé et il suit un traitement par chauffage à une vitesse de 5 à 10°C par minute dans un environnement inerte et à une température de 1400°C pendant 2 à 5 heures.

5. Méthode de traitement de déchet technologique provenant du traitement de minerais de cuivre et de concentrats contenant du fer, vu la Revendication 1, lors de laquelle le filtrat reçu du filtrage de l'hydroxyde de fer de l'étape 3, plus la solution de l'hydroxyde d'ammonium du premier rinçage de l'étape 3, sont soumis à l'évaporation jusqu'à ce que les vapeurs atteignent une température de 98-99°C et le tout est traité avec de la résine échangeuse de cations à une température de 65-70°C, à pH 0.9-1.0, après cela, la solution reçue d'acide oxalique est séparée et la saturation de la résine continue jusqu'à pH 2.1-2.5, puis le mélange de la réaction est refroidi jusqu'à 40°C et après, la résine échangeuse d'ions est supplémentairement saturée à l'aide de la solution du deuxième lavage de l'étape 3 jusqu'à pH 8.5 - 9.0, après cela, la solution diluée d'oxalate d'ammonium est retournée à l'étape 3, où elle sert de solution à la première opération de rinçage de l'hydroxyde de fer et la résine échangeuse d'ions est lavée à eau déionisée à une température de 90°C, lors d'un barbotage continu d'air, puis elle est rincée avec la solution de l'acide oxalique à pH 0.9 - 1.0, reçue à l'étape 5.
